# EUROPÄISCHE PATENTSCHRIFT

(11) **EP 0 900 675 B1**
(45) Veröffentlichungstag und Bekanntmachung des Hinweises auf die Patenterteilung: **18.06.2003**
(21) Anmeldenummer: 98115671.4
(22) Anmeldetag: 20.08.1998
(51) Int. Cl.: B60G 7/00

(54) **Kraftfahrzeugachse**
Motor vehicle axle
Essieu de véhicule automobile

(30) Priorität: 02.09.1997 DE 19738249
(43) Veröffentlichungstag der Anmeldung: 10.03.1999
(73) Patentinhaber: DaimlerChrysler AG, 70567 Stuttgart (DE)
(72) Erfinder: Hettich, Ralph, 71394 Kernen (DE); Hölzel, Günter, 73269 Hochdorf (DE)

(56) Entgegenhaltungen:
- EP-A- 0 052 993
- EP-A- 0 851 131
- WO-A-96/12897
- FR-A- 2 570 994
- GB-A- 2 327 649
- US-A- 3 121 348
- US-A- 3 756 646
- US-A- 4 772 044
- US-A- 5 338 056
- PATENT ABSTRACTS OF JAPAN vol. 013, no. 446 (M-877), 6. Oktober 1989 (1989-10-06) & JP 01 171931 A (ISUZU MOTORS LTD), 6. Juli 1989 (1989-07-06)
- PATENT ABSTRACTS OF JAPAN vol. 1995, no. 01, 28. Februar 1995 (1995-02-28) & JP 06 278433 A (SUZUKI MOTOR CORP), 4. Oktober 1994 (1994-10-04)
- PATENT ABSTRACTS OF JAPAN vol. 016, no. 471 (M-1318), 30. September 1992 (1992-09-30) & JP 04 169309 A (NISSAN MOTOR CO LTD), 17. Juni 1992 (1992-06-17)

## Beschreibung

Die Erfindung betrifft eine Kraftfahrzeugachse gemäß dem Oberbegriff des Anspruches 1.

Bekannt sind Kraftfahrzeugachsen, die aus Metall kostengünstig zu fertigen sind. Sollen diese Kraftfahrzeugachsen auch für hohe Belastungen eine ausreichende Festigkeit und Steifigkeit aufweisen, so müssen sie groß dimensioniert werden, wodurch ihr Gewicht erheblich steigt. Diese Vorgehensweise kann zu Einbauproblemen führen, wirkt sich aber auch auf den Kraftstoffverbrauch des Fahrzeuges ungünstig aus.

In der JP 04-169309 (A) ist ein Lenker für eine Radaufhängung dargestellt, in dem ein Luftführungskanal zur Bremsscheibe ausgeformt ist.

Des weiteren ist in der FR 25 70 994 A1 ein Lenker für eine Radaufhängung beschrieben, der mit im Querschnitt schalenförmigen Formteilen ausgebildet ist.

Aus der DE 42 16 640 C2 ist ein Lenker für eine Radaufhängung eines Kraftfahrzeuges bekannt, der zwei längliche und im Querschnitt schalenförmige Formteile umfaßt, die an ihren längsverlaufenden, seitlichen Kanten zu einem einen Hohlraum begrenzenden Formteilkörper zusammengeschweißt sind. Hier sind zur Erhöhung der Steifigkeit randseitige Versteifungssicken in das Stahlblech eingepreßt, wobei die Gestaltungsmöglichkeit und damit die mögliche Festigkeitserhöhung auch aufgrund der vorgegebenen Materialeigenschaften begrenzt ist.

Aus der JP 06-278 433 (A) ist ein Lenker bekannt, in dem ein Kabel geführt werden kann, welches durch Öffnungen im Lenker hindurch hinein- und wieder herausgeführt wird.

In der DE 30 04 194 A1 ist eine Verbund- oder Koppellenkerachse für Kraftfahrzeuge beschrieben, welche als einteilige Baueinheit aus fasergefülltem Kunststoff ausgebildet ist. Eine derartige Lenkerachse unterliegt beschränkenden Konstruktionsanforderungen und weist eine nur geringe Bruchdehnung auf, die leicht zu einem Lenkerabriß bei großer Belastung, wie sie z.B. beim Touchieren eines Bordsteines vorkommt, führen kann.

Aus der DE 21 03 036 ist eine Fahrzeugachse aus einem Metallrohr bekannt, welche mit aus Harz verklebten Fasern besteht. Auch aus der WO 96/12 897 ist eine Fahrzeugachse bekannt, die aus Metall und zumindest bereichsweise aus faserverstärktem Kunststoff besteht. Weiterhin zeigt JP-A-01 171 931 einen Lenker nach dem Oberbegriff des Anspruchs 1.

Zum allgemeinen Hintergrund wird betreffend schalenförmiger, zusammenwirkender Formteile an Lenkern einer Radaufhängung noch auf die Druckschriften DE 29 52 176 C2 und DE 295 19 965 U1 verwiesen.

Die Aufgabe der Erfindung besteht darin, die Steifigkeit und Festigkeit einer Kraftfahrzeugachse bei günstigem Achsengewicht zu erhöhen.

Die Aufgabe wird durch die kennzeichnenden Merkmale des Patentanspruches 1 gelöst.

Durch die Ummantelung einer aus Metall gefertigten Kraftfahrzeugachse zumindest bereichsweise mit einem Faserverbundwerkstoff, z.B. mit CfK, wird erreicht, daß die Steifigkeit sowie die Festigkeit der Kraftfahrzeugachse durch die Faserstruktur an der Außenhaut erhöht werden, ohne dabei das Gewicht der Kraftfahrzeugachse in ungünstiger Weise deutlich anzuheben. Die Kraftfahrzeugachse bleibt dabei bei Belastung weiterhin bei hoher Reißfestigkeit verformbar. Der Metallkörper der Kraftfahrzeugachse kann damit kleiner dimensioniert werden, wodurch weniger Bauraum für die Kraftfahrzeugachse notwendig wird und zusätzlich Gewicht eingespart werden kann.

Die Vorteile dieser Ummantelung wirken sich besonders vorteilhaft bei einem Lenker für die Radaufhängung aus.

Durch die Festlegung mindestens eines längsverlaufenden Rohres im Lenker oder durch die Festlegung eines länglichen Schalenelementes mit beiden Längskanten an mindestens einer Längsseite des Formteilkörpers wird die Stabilität des Lenkers noch weiter erhöht.

Ein Lenker mit innenliegend festgelegten, z.B. angeschweißten oder angelöteten Rohren, kann dabei mit seinen schalenförmigen Formteilen vorwiegend nach aerodynamischen Gesichtspunkten gestaltet werden, während durch die Rohre, ohne die Gestaltung zu behindern, zur notwendigen Festigkeit bzw. Steifigkeit beigetragen wird.

Auch das längliche Schalenelement an mindestens einer Seite des Formteilkörpers des Lenkers läßt eine Anpassung des Formteilkörpers an die Festigkeitserfordernisse zu und kann dann neben der Festigkeitserhöhung durch seine Gestaltung auch noch aerodynamische Aufgaben übernehmen.

Durch die im Hohlraum des Formteilkörpers und/oder im Hohlraum des Schalenelementes längsverlaufend festgelegte Rohre können Kabel bzw. Leitungen geführt werden, die dann außerhalb des Lenkers nicht stören und selbst nicht beschädigt werden können. Dadurch entstehen auch auf der Länge des Lenkers keine zusätzlichen Fixierpunkte für die Kabel und Leitungen, wodurch diese bei einem beim Crash erfolgenden Zug ein Stück weit in Längsrichtung nachgeben können und nicht sofort abgerissen werden. Da die Kabel und Leitungen z.B. für die ABS-Regelung, als Bremsleitung oder als Stromkabel dienen, ist dies ein sicherheitsrelevanter Vorteil. Die Kabel und Leitungen können durch vorgesehene Öffnungen im Lenker in das jeweilige Rohr eingeführt werden und werden durch das Rohr an die vorgesehene Austrittsstelle am Lenker geführt.

Der Lenker kann an seinen freien Enden in Abschlußplatten enden, wodurch Schmutz und Feuchtigkeit von den Hohlräumen ferngehalten wird.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: in einer Ansicht den Aufbau eines Lenkers einer Kraftfahrzeugachse,
- Fig. 2: einen ähnlichen Lenker in Richtung auf die Lenkerenden betrachtet, und
- Fig. 3: die Einzelteile eines ähnlichen Lenkers in einer Explosionsdarstellung.

Die Figuren zeigen einen V-förmigen Lenker 1 einer Kraftfahrzeugachse, für eine Radaufhängung eines nicht weiter dargestellten Kraftfahrzeuges, der z.B. aus Titan oder Stahl hergestellt ist.

Durch die Ummantelung einer aus Metall gefertigten Kraftfahrzeugachse zumindest bereichsweise mit einem Faserverbundwerkstoff, z.B. mit CfK, wird erreicht, daß die Steifigkeit sowie die Festigkeit der Kraftfahrzeugachse durch die Faserstruktur an der Außenhaut erhöht werden, ohne dabei das Gewicht der Kraftfahrzeugachse in ungünstiger Weise deutlich anzuheben. Die Kraftfahrzeugachse bleibt dabei bei Belastung weiterhin bei hoher Reißfestigkeit verformbar. Der Metallkörper der Kraftfahrzeugachse kann damit kleiner dimensioniert werden, wodurch weniger Bauraum für die Kraftfahrzeugachse notwendig wird und zusätzlich Gewicht eingespart werden kann.

Diese Vorteile wirken sich insbesondere bei einem Lenker 1 für die Radaufhängung günstig aus.

Der Lenker 1 weist zwei längliche und im Querschnitt schalenförmig ausgebildete Formteile 2 und 3 auf, die mit ihren längsverlaufenden, seitlichen Kanten 4, 4' und 5, 5' zu einem einen Hohlraum 6 begrenzenden Formteilkörper 7 zusammengelötet bzw. zusammengeschweißt sind.

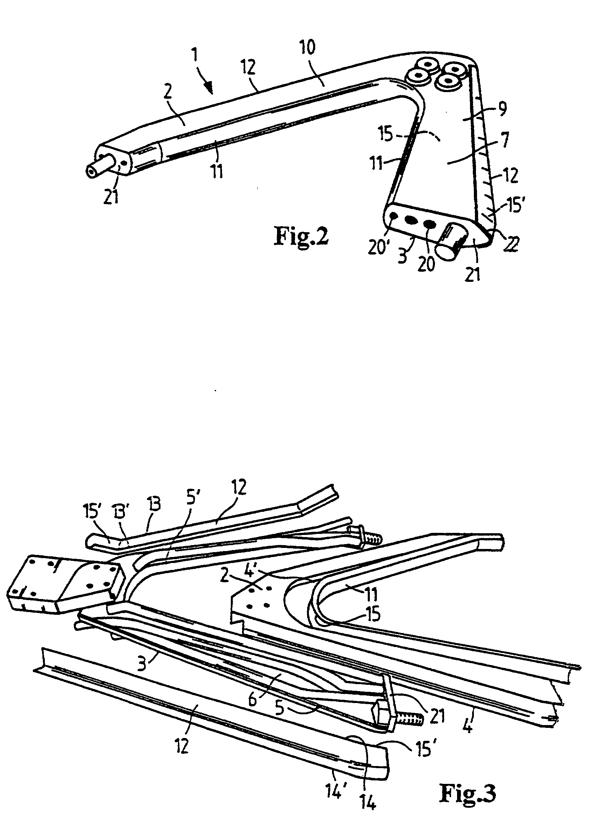

An diesem Formteilkörper 7 mit seinem Hohlraum 6 sind seitlich, d.h. an der innenliegenden Seite sowie an der außenliegenden Seite der von einer Lagerstelle 8 des Lenkers 1 abkragenden Lenkerschenkel 9 und 10 Schalenelemente 11 und 12 mit ihren Längskanten 13 und 13' bzw. 14 und 14' angelötet bzw. angeschweißt. Das innenliegende Schalenelement 11 ist dabei, wie die Figur 3 zeigt, einteilig ausgebildet und um die Biegung des Lenkers 1 geführt. Diese, die Steifigkeit und Festigkeit des Lenkers 1 zusätzlich erhöhenden Schalenelemente 11 und 12 schließen mit der jeweiligen Seitenwand des Formteilkörpers 7 einen weiteren Hohlraum 15 bzw. 15' ein.

Wie die Figur 2 zeigt, ist die Mehrteiligkeit des Lenkers 1 aus Formteilkörper 7 und Schalenelementen 11 und 12 von außen nicht sichtbar, da die Verbindungskanten geglättet wurden und die Lenkerschenkel 9 und 10 und der dazwischenliegende Biegungsabschnitt mit einem Faserverbundwerkstoff, der z.B. aufgeklebt oder aufgespritzt werden kann, ummantelt wurde.

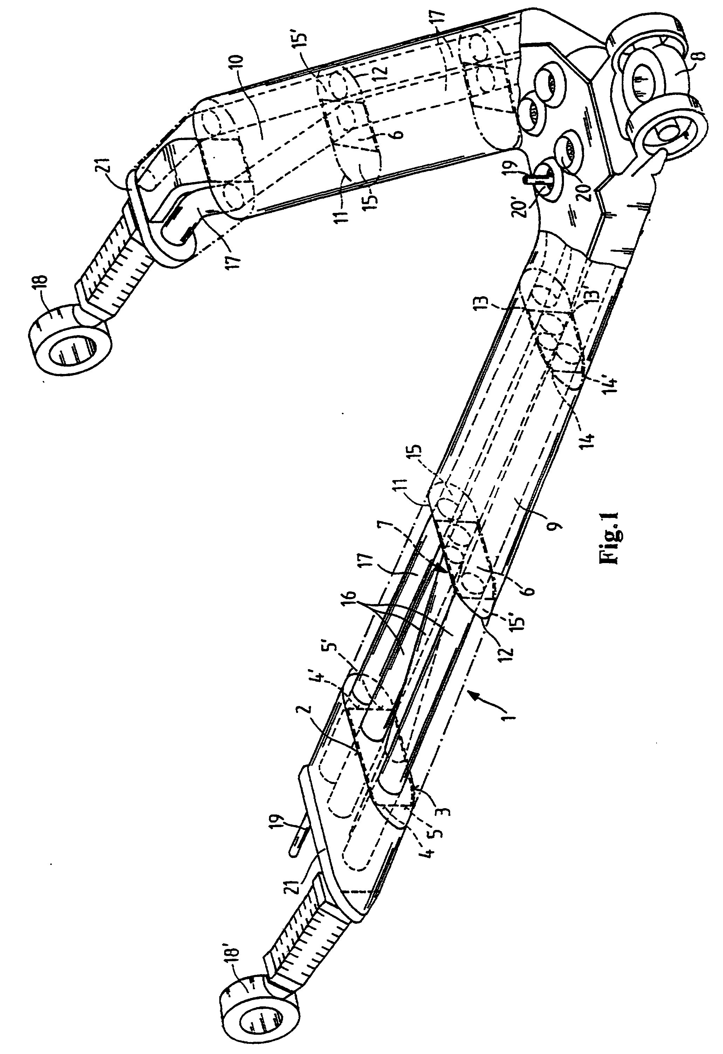

Als weitere Maßnahme, um die Steifigkeit und Festigkeit des diesen Formteilkörper 7 umfassenden Lenkers 1 zu erhöhen, sind in den Hohlraum 6 des Formteilkörpers 7 längsverlaufende Rohre 16 eingelegt, welche zumindest an einer Stelle durch Löten bzw. Schweißen festgelegt sind. Wie die Figur 1 zeigt, nehmen auch die Schalenelemente 11 bzw. 12 jeweils Rohre 17 auf, die auch von einem Hohlraum 15 in den anderen Hohlraum 6 wechselnd geführt sein können.

Um den Verlauf der Rohre 16 und 17 deutlich zu zeigen, sind in der Figur 1 in den Querschnitt in verschiedenen Abschnitten strichpunktiert der Formteilkörper 7 und die Schalenelemente 11 und 12 mit den dort liegenden Rohrquerschnitten einskizziert, und ein Abschnitt auf der linken Schenkelseite wie auch auf der rechten Schenkelseite des Lenkers 1 mit durch die Wände sichtbaren, d.h. durchgezogen gezeichneten Rohren 16 bzw. 17 dargestellt. Mit der Lagerstelle 8 kann der Lenker 1 im Bereich eines Radträgers und mit den Lagerstellen 18 und 18' mit einem Fahrzeugchassis verbunden werden.

Die für ihre Verstärkungsfunktion in Material und Gestalt frei wählbaren Rohre 16 und 17 haben weiterhin die Aufgabe, Kabel bzw. Leitungen 19 aufzunehmen, die dann außerhalb des Lenkers 1 nicht stören und selbst nicht beschädigt werden können. Diese Kabel bzw. Leitungen 19, z.B. für die ABS-Regelung, als Bremsleitung oder als Stromkabel, werden in von außerhalb des Formteilkörpers 7 bzw. der Schalenelemente 11 bzw. 12 zugängliche Öffnungen 20, 20' der Rohre 16 bzw. 17 eingeführt und in den Rohren 16 bzw. 17 nicht zusätzlich fixiert, so daß sie bei einem beim Crash erfolgenden Zug ein Stück weit in Längsrichtung nachgeben können und nicht sofort abgerissen werden. Diese Öffnungen 20 bzw. 20' sind auch in den Abschlußplatten 21 an den freien Enden der Lenkerschenkel 9 und 10 vorgesehen. Die angelöteten bzw. angeschweißten Abschlußplatten 21 dienen dazu, die Hohlräume 6 und 15 bzw. 15' abzuschließen, so daß kein Schmutz und keine Feuchtigkeit in den Lenker 1 eindringen kann.

Der Lenker 1 bietet sich dazu an, eine Rammleiste 22 entlang eines Schenkels 9 bzw. 10 festzulegen.

Diese erfinderische Ausbildung eines Lenkers kann natürlich ebenfalls bei einer Schwinge eines Motorrades Anwendung finden.

## Patentansprüche

1. Kraftfahrzeugachse, mit einem Lenker (1) für eine Radaufhängung aus Metall, der zumindest bereichsweise mit einem Faserverbundwerkstoff ummantelt ist,
**dadurch gekennzeichnet,**
**daß** der Lenker (1) zwei längliche und im Querschnitt schalenförmig ausgebildete Formteile (2 und 3) aufweist, die an ihren längsverlaufenden, seitlichen Kanten (13 und 13' bzw. 14 und 14') zu einem einen Hohlraum (6) begrenzenden Formteilkörper (7) verbunden sind.

2. Kraftfahrzeugachse nach Anspruch 1,
**dadurch gekennzeichnet,**
**dass** im Hohlraum (6) mindestens ein längsverlaufendes Rohr (16) festgelegt ist.

3. Kraftfahrzeugachse nach Anspruch 1 oder 2,
**dadurch gekennzeichnet,**
**dass** am Formteilkörper (7) an mindestens einer Längsseite ein längliches Schalenelement (11 bzw. 12) mit beiden Längskanten (13, 13' bzw. 14, 14') befestigt ist, welches mit der Wand des Formteilkörpers (7) einen weiteren Hohlraum (15 bzw. 15') einschließt.

4. Kraftfahrzeugachse nach Anspruch 3,
**dadurch gekennzeichnet,**
**daß** im Hohlraum (15, 15') des Schalenelementes (11, 12) mindestens ein längsverlaufendes Rohr (16 bzw. 17) festgelegt ist.

5. Kraftfahrzeugachse Anspruch 3,
**dadurch gekennzeichnet,**
**daß** Öffnungen (20 bzw. 20') des Rohres (16, 17) von außerhalb des Formteilkörpers (7) bzw. des Schalenelementes (11, 12) zugänglich sind.

6. Kraftfahrzeugachse nach Anspruch 4,
**dadurch gekennzeichnet,**
**daß** durch das Rohr (16 bzw. 17) hindurch mindestens ein Kabel bzw. eine Leitung (19) geführt ist.

7. Kraftfahrzeugachse nach Anspruch 4,
**dadurch gekennzeichnet,**
**daß** das Rohr (16, 17) in seinem Verlauf von einem Hohlraum (15) in einen anderen Hohlraum (6) wechselnd geführt ist.

8. Kraftfahrzeugachse nach Anspruch 3,
**dadurch gekennzeichnet,**
**daß** die Hohlräume (6, 15, 15') an den freien Enden des Lenkers (1) durch eine Abschlußplatte (21) überdeckt sind.

9. Kraftfahrzeugachse nach Anspruch 8,
**dadurch gekennzeichnet,**
**daß** die Abschlußplatte (21) mindestens eine Zugangsöffnung (20, 20') zu dem mindestens einen Rohr (16 bzw. 17) aufweist.

10. Kraftfahrzeugachse nach Anspruch 1,
**dadurch gekennzeichnet,**
**daß** der Lenker (1) zwei V-förmig von einer Lagerstelle (8) abkragende Lenkerschenkel (9 und 10) aufweist.

11. Kraftfahreugachse nach Anspruch 10,
**dadurch gekennzeichnet,**
**dass** das Schalenelement (11) einteilig um die Biegung des Lenkers (1) verlaufend ausgebildet ist.

## Claims

1. A motor vehicle axle with a suspension link (1) for a wheel suspension system made of metal, at least certain areas of which are sheathed with a fibre composite material,
**characterised in that**
the suspension link (1) has two elongated machined parts (2 and 3) of cup-shaped design, the longitudinally running lateral edges (13 and 13'/14 and 14') of which are connected to a body (7) of a machined part delimiting a hollow space (6).

2. A motor vehicle axle in accordance with claim 1,
**characterised in that**
at least one longitudinally running tube (16) is fixed in the hollow space (6).

3. A motor vehicle axle in accordance with claim 1 or 2,
**characterised in that**
fixed to at least one longitudinal side of the body (7) of the machined part by both longitudinal edges (13, 13'/14, 14') is an elongated cup-shaped element (11/12) which encloses a further hollow space (15/15') with the wall of the body (7) of the machined part.

4. A motor vehicle axle in accordance with claim 3,
**characterised in that**
at least one longitudinally running tube (16/17) is fixed in the hollow space (15, 15') of the cup-shaped element (11, 12).

5. A motor vehicle axle in accordance with claim 3,
**characterised in that**
openings (20/20') in the tube (16, 17) are accessible from outside the body (7) of the machined part or the cup-shaped element (11, 12).

6. A motor vehicle axle in accordance with claim 4,
**characterised in that**
at last one cable or line (19) runs through the tube (16/17).

7. A motor vehicle axle in accordance with claim 4,
**characterised in that**
the tube (16/17) switches from one hollow space (15) to another hollow space (6).

8. A motor vehicle axle in accordance with claim 3,
**characterised in that**
the hollow spaces (6, 15, 15') are covered by a closing plate (21) at the free ends of the suspension link (1).

9. A motor vehicle axle in accordance with claim 8,
**characterised in that**
the closing plate (21) has at least one access opening (20, 20') to the at least one tube (16/17).

10. A motor vehicle axle in accordance with claim 1,
**characterised in that**
the suspension link (1) has two V-shaped legs (9 and 10) projecting from a bearing point (8).

11. A motor vehicle axle in accordance with claim 10,
**characterised in that**
the cup-shaped element (11) is designed as one piece which runs around the curve of the suspension link (1).

## Revendications

1. Essieu de véhicule automobile, avec un bras de liaison (1) en métal pour une suspension de roue, lequel bras est revêtu au moins partiellement d'un matériau renforcé par des fibres,
**caraetérisé en ce que**
le bras de liaison (1) comporte deux préformés (2 et 3) oblongs et à section concave, reliés en leurs arêtes latérales (13, 13' et 14, 14') longitudinales pour former un corps préformé (7) limitant une cavité (6).

2. Essieu de véhicule automobile selon la revendication 1,
**caractérisé en ce que**
au moins un tube longitudinal (16) est fixé dans la cavité (6).

3. Essieu de véhicule automobile selon la revendication 1 ou 2,
**caractérisé en ce que**
un élément concave (11 et 12) longitudinal est fixé sur le corps préformé (7) sur au moins un côté longitudinal, par les deux arêtes longitudinales (13, 13' et 14, 14'), lequel élément concave enferme une autre cavité (15 et 15') avec la paroi du corps préformé (7).

4. Essieu de véhicule automobile selon la revendication 3,
**caractérisé en ce que**
au moins un tube longitudinal (16 et 17) est logé dans la cavité (15, 15' de l'élément concave (11, 12).

5. Essieu de véhicule automobile selon la revendication 3,
**caractérisé en ce que**
des ouvertures (20 et 20') du tube (16, 17) sont accessibles depuis l'extérieur du corps préformé (7) ou de l'élément concave (11, 12).

6. Essieu de véhicule automobile selon la revendication 4,
**caractérisé en ce que**
au moins un câble ou une conduite (19) traverse le tube (16 et 17).

7. Essieu de véhicule automobile selon la revendication 4,
**caractérisé en ce que**
le tube (16, 17), dans son tracé, passe d'une cavité (15) dans une autre (6).

8. Essieu de véhicule automobile selon la revendication 3,
**caractérisé en ce que**
les cavités (6, 15, 15') sont recouvertes d'une plaque de fermeture (21) au niveau des extrémités libres du bras de liaison (1).

9. Essieu de véhicule automobile selon la revendication 8,
**caractérisé en ce que**
la plaque terminale (21) comporte au moins une ouverture d'entrée (20, 20') pour le tube (16, 17) au nombre d'au moins un.

10. Essieu de véhicule automobile selon la revendication 1,
**caractérisé en ce que**
le bras de liaison (1) comporte deux bras de suspension (9 et 10) disposés en porte-à-faux, en formant un V, à partir d'un point d'appui (8).

11. Essieu de véhicule automobile selon la revendication 10,
**caractérisé en ce que**
l'élément concave (11) est configuré en une seule pièce et épouse la courbure du bras de liaison (1).
